# EUROPEAN PATENT SPECIFICATION

(11) **EP 4 212 003 B1**
(45) Date of publication and mention of the grant of the patent: **13.05.2026**
(21) Application number: 22151575.2
(22) Date of filing: 14.01.2022
(51) Int. Cl.: A01D 41/12, A01D 41/127, A01D 75/00, A01F 12/40

(54) **AGRICULTURAL RESIDUE DEPOSITING APPARATUS AND METHOD**
VORRICHTUNG UND VERFAHREN ZUR ABLAGE LANDWIRTSCHAFTLICHER RÜCKSTÄNDE
APPAREIL ET PROCÉDÉ DE DÉPÔT DE RÉSIDUS AGRICOLES

(43) Date of publication of application: 19.07.2023
(73) Proprietor: CNH Industrial Belgium N.V., 8210 Zedelgem (BE)
(72) Inventor: Leenknegt, Arno, 8830 Hooglede (BE); Missotten, Bart M.A., 3020 Herent (BE); Jongmans, Dré W.J., 4791 AG Klundert (NL); Tallir, Frederik, 8600 Esen (BE); Deruyter, Lucas, 8830 Gits (BE); Mahieu, Thomas, 8640 Vleteren (BE)
(74) Representative: CNH Industrial IP Department

(56) References cited:
- EP-B1- 3 571 918
- US-A1- 2012 123 650
- US-A1- 2021 015 039
- US-A1- 2021 034 867

## Description

### Field of the Invention

The invention relates to agricultural residue depositing apparatus and a related method of using such apparatus.

### Background of the Invention

Various kinds of harvesting machine have been introduced into agriculture over the past century. In use many of these generate residue products, chiefly constituted by plant parts, as by-products of harvesting processes. Nearly all crop plants include parts such as stems, straw, seed pods or leaves that cannot directly be used as food for humans or animals, or fuel products; and/or are of low value such that extensive processing or transporting of them is not economically justified. Such unusable plant parts become agricultural field residue during harvesting operations. Field residue in some cases may include additional or other components such as grit, gravel or stones, and/or weeds. Field residue is also called agricultural residue or crop residue. These terms are used synonymously herein. For the avoidance of doubt, field residue as referred to herein does not include products such as manure or slurry that while typically spread behind a moving machine do not result from harvesting processes.

Field residue resulting from harvesting (especially of various cereal plants) typically is not removed from the field in which it is created. Historically it was commonplace either to burn such residue in the field, or plough it into the soil after harvesting in order to improve the soil nutrient content for subsequently cultivated plants. Nowadays however it is recognised that field residue can also be useful for other purposes if it is correctly spread on the ground surface of a field. Modern harvesting machines commonly include sub-systems the aim of which is to treat and distribute the residues in a desired manner.

Such purposes include slowing the drying of soil through evaporation of water by placing an even layer of residue on the soil surface; and the prevention or slowing of soil erosion. Residue spreading if carried out correctly moreover can inhibit or slow down the germination of weed plants in the period between harvesting and re-seeding of a field.

Furthermore it is known for the residues of some harvested plants (canola being an example) to produce phytotoxic compounds during decomposition. Such compounds can inhibit the germination of subsequently planted crops. Careful spreading of the residue can prevent, control or at least reduce the toxic compound production.

For reasons such as the foregoing it is frequently desired to introduce as much precision as possible into the deposition of agricultural residue resulting from harvesting operations. In the majority of cases it is desired to spread an even areal density of residue behind a moving harvesting machine such as a combine harvester using a sub-system referred to as a spreader. However in some situations it may be desired to spread e.g. varying depths of residue in order to achieve particular effects.

Field residue often is pre-treated within the harvesting machine. An example of such pre-treatment is the chopping of plant parts to predetermined sizes using a cutting sub-system forming part of the harvesting machine. Such chopping is often desirable e.g. when the residue is constituted by or contains a considerable amount of straw. Long lengths of straw are inconvenient to handle as residue and may not produce the desired effects, especially when it is required to cover the soil surface of a field in order to prevent erosion or dehydration. Furthermore, chopping of residue prevents the process of degradation of the residue from taking longer than a desired time; and ensures that the components of a residue batch are all of approximately the same size.

Following chopping however, or more pronouncedly when chopping is not carried out, the ballistic properties of field residue are not well suited to distribution behind a harvesting machine in a manner achieving even spreading (or another spreading cross-section such as a centrally heaped line). The trajectories of residue parts may be unpredictable owing to their lightness and shapes. Moreover the residue components typically are a mixture of chopped straw and chaff meaning the ballistic properties are not consistent throughout the residue. This is in contrast to for example fertiliser and seed pellets the (typically spherical) shapes and uniformity of which mean they nearly always are spread in a predictable manner when dispensed from a moving machine.

Winds can adversely affect the ability of a harvesting machine to spread field residues in a desired, e.g. even (in particular with respect to areal density) manner. Winds can be very variable due to localised meteorological circumstances and/or can also be influenced by the presence/absence of nearby fixed objects, such as bushes, trees, buildings, etc, and/or mobile objects, such as other harvesters, tractors towing trailers, etc. Winds, in particular cross-winds, can through the effect of aerodynamic drag on the residue particles lead to extensive parts of a field not receiving any residue during spreading; and other parts receiving an excess of residue. Also the variations in the aerodynamic performance of the different parts of a residue mix can mean that the concentrations of different components of the residue may be inconsistent as a result of wind influence.

Slopes in fields also can cause uneven spreading of residue; and a sloping field may be more prone to the influence of wind than a more sheltered location.

The characteristics of the residue often vary over time and location, for example because during a harvesting operation the characteristics of the crop plants, from which the residue is formed, also vary; or because of changes in the weather and/or soil condition. Hence during the course of a harvesting session for instance the density and moisture content of the residue may vary. The settings of a harvesting machine may be adjusted during harvesting in order to maximise the harvesting of valuable crop parts in light of such changes and this may introduce further variability into the residue make-up, making it hard to achieve desired spreading results.

The operational parameters of the spreader may be adjustable. In some harvesting machines this can only be achieved by manually re-setting adjustable parts while the machine is inactive; but some more expensive machines such as certain combine harvesters include actuator systems that permit adjustment of the spreader by way of commands input by an operator using cab-mounted controls. Adjustable parameters of the residue treatment process can include, for example, the length to which residue parts are chopped; the angle at which residue is ejected from the spreader onto the ground; and the speed/energy of ejection.

Furthermore it can be strongly desirable to limit the extent of distribution of field residue during harvesting operations. This may be important e.g. at the boundaries of fields beyond which it is not acceptable for residues to spread. Also it generally is desirable to ensure that during depositing the residues do not spread into regions of uncut crop This can be to avoid overloading of the intake sections of a harvesting machine when harvesting crop that is mixed with residues from a previous harvesting pass; and to ensure that the quality of the harvested crop is not adversely affected by residue contamination.

Hence there is a general need for accuracy in the containment of residue distribution; and winds can make it additionally hard to ensure the spread of residues over desired zones of the field surface.

Various attempts have been made to automate the process of residue spreading as a solution to the problems summarised above.

US 2020/0060092 A discloses a combine harvester including a chaff cutter and an adjustable produce distributing arrangement for distributing residue at the rear of the machine. The combine harvester includes a driver assistance system that optimises control of the produce distributing arrangement using at least one sub-strategy comprising throw direction correction and/or inclination-dependent produce distribution and/or produce distribution in a longitudinal direction and/or produce distribution in a transverse direction, with respect to at least one optimisation criterion.

US 2005/0194473 A discloses a work vehicle having a fluent material spreader comprising two counter-rotating variable speed impellers that receive and broadcast fluent material such as field residue. A right-side impeller broadcasts out to a right-side material broadcast width, and left-side impeller broadcasts out to a left-side material broadcast width. The rotational speed of the right-side impeller is commanded to achieve a desired a right-side material broadcast width, and the rotational speed of the left-side impeller is commanded to achieve a desired a left-side material broadcast width. Command of the right-side and left-side impellers is achieved either manually by an operator, or automatically by a control system based on sensor input.

EP 1408732 A discloses a distributing device for chopped products that are discharged from a harvester, comprising a guiding device for setting the ejection direction of the chopped products, a motor for adjusting the ejection direction of the guiding device, and a control device that is linked with a side detection unit for detecting the position of a harvested part and/or of a not yet harvested part of a field relative to the harvester. Signals of the detection unit are taken into consideration in the control of the motor. The side detection device is linked with a position establishing device and with a memory device in which information about the field to be harvested is stored. The side detection device identifies the position of the harvested part and/or of the not yet harvested part of the field by way of the position of the harvester and the information stored in the memory device.

EP 3145289 A discloses an agricultural combine harvester comprising a residue spreading system that is steerable to influence distribution of residue, wherein the combine harvester includes a sensor for emitting a wave signal through the residue during spreading. The sensor measures reflections of the signal from a first zone of the residue and from a second zone of the residue. The spreading system is steered based on the reflections. The wave signal has a wavelength that is greater than 0.001 mm and less than 50 mm.

EP 2936961 A and EP 2936962 A each disclose a vehicle having a receiving device for harvested material and a distribution device for distributing a spreading material separated from the harvested material in the form of a spreading material strip behind the moving vehicle. The distribution device can be controlled to adjust a parameter of the distribution of material, such as the position of the strip transversely relative to the direction of travel; a detection means is provided for detecting the distribution of the crop over the width of the receiving device; and a control unit determines the position of the strip on the basis of the detected distribution.

DE 102014005904 A discloses a vehicle having steerable wheels and a distribution device for ejecting grit in the form of a flow centred around a central ejection direction. A control unit varies the mean ejection direction as a function of the steering angle of the wheels.

DE 102014014049 A discloses an agricultural vehicle having a pick-up device for picking up crop from a field area, a processing section in which grit is separated from the crop, and a distribution device for ejecting a stream of grit in alternating throwing directions onto the field area. A sensor at the outlet of the distribution device detects the density and speed of the grit jet. A processing unit models a distribution of the grit on the field surface resulting from the measured density and speed, and controls operating parameters of the distribution device on the basis of the modelled distribution of the grit.

EP 3618604 A discloses one or more tangible, non-transitory, machine-readable media including instructions that cause a processor to receive a signal indicative of a residue coverage on a surface of an agricultural field from a sensor positioned behind a harvester system relative to a direction of travel. The instructions also cause the processor to determine the residue coverage on the surface of the agricultural field based on the signal, and the residue coverage includes a percentage of the agricultural field that is covered by residue. The instructions cause the processor to control a residue control system based on the residue coverage.

EP 3145290 A discloses an agricultural harvester comprising a sensor for measuring a position of an object near the harvester. The sensor is connected to a processor for defining at least two different danger zones respectively corresponding to at least two defining at least two different danger zones respectively corresponding to at least two different sets of harvester driving parameter values. The processor can determine actual harvester driving parameter values, and the processor can compare the actual harvester driving parameter values with the different sets to select a matching set and to select a corresponding one of the danger zones. The processor outputs a warning signal if the position is in the corresponding danger zone. The apparatus of EP 3145290 A is operable when the harvester is in a residue spreading mode.

US 2021/0015039 A1 describes a crop residue monitoring system including a harvester, a camera to capture an image of crop residue generated by the harvester, an analytical unit to derive a value for a crop residue parameter of the crop residue based upon an optical analysis of the image and a control unit to adjust a subsequent field operation based upon the value of the crop residue parameter.

All of the foregoing prior art approaches to residue distribution either seek to automate the adjustment of distribution equipment in full or, in the case of US 2005/0194473 A, include an option for visually monitoring the broadcast width and adjusting the rotational speed of the impeller(s) in an attempt to optimise spreading characteristics.

Full automation of the process of optimising residue spreading as proposed hitherto is potentially unsuccessful because the operators of combine harvesters tend to lack faith in the accuracy and/or reliability of such arrangements. Hence the fully automated approaches to residue distribution adjustment may be unpopular, under-utilised or overridden if provided.

Systems relying on operator inspection of distributed residue before distribution adjustments are made are likely to be distinctly sub-optimal for a variety of reasons.

Firstly it is generally the case that rearward visibility from the cab of a harvesting machine is either poor or non-existent. The cabs typically have only forwardly and sideways-facing windows because a large grain tank, or another bulky part of the machine, usually lies immediately behind the location of the cab. This means that operators nearly always are reliant on rear-view mirrors or rear-view cameras in order to inspect the area behind the machine. Both these means provide only a limited field of view that in the case of mirrors usually omits the area immediately behind the machine at which residue is spread onto the ground. Also the mirrors, and some cameras, have no ability to enhance resolution, enlarge or shrink the visible image or readily change the field of view.

Moreover when a harvesting machine operates in dry field conditions typically it generates a large cloud of dust that is particularly dense at the rear of the vehicle and often is opaque. This renders mirrors and cameras intended to provide an image of the area behind the harvesting machine practically useless much of the time. As a result it often is not possible for an operator to inspect the distribution of field residue

This drawback means that residue spreading control systems requiring visual cross-checking of the spreading operation in some cases are of little or no benefit. This can be the case even when automated systems are provided since the inability of an operator to check, in real time, the effectiveness of the distribution action means that faith in such systems is likely to remain poor. The outlined drawbacks of the prior art are overcome by an agricultural residue depositing apparatus according to claim 1 and by a method of depositing agricultural residue according to claims 12 or 13.

According to the disclosure hereof in a first aspect there is provided agricultural residue depositing apparatus comprising a mobile harvesting machine that is capable of generating agricultural residue and depositing it on a ground surface over which the mobile harvesting machine is moveable, the mobile harvesting machine including an interface device that is capable of generating one or more output that is interpretable by a human operator; the apparatus including one or more sensors of agricultural residue deposited or being deposited by the mobile harvesting machine and one or more processors to which the one or more sensors are operatively connected, the one or more processors additionally being operatively connected to the interface device such that the interface device generates one or more outputs, based on one or more signals generated by the one or more sensors, of or relating to agricultural residue deposited by the mobile harvesting machine; and the one or more processors being capable of adding human-interpretable augmentation to one or more said outputs indicating one or more parameters of or relating to the deposition of residue.

Apparatus as defined above promotes a mode of operation during residue spreading in which the interface device produces an output such as but not limited to a real-time camera image, a mimic display, a simulation or a hybrid of two or more such indications of the residue as it is undergoing spreading, or immediately following spreading, behind the mobile harvesting machine, together with augmentation such as but not limited to one or more lines, symbols, numbers and/or words that are visible using the interface device and indicate for instance one or more boundary of a line of spread residue, a deposition profile or cross-section of the residue, an indicator of the effect of wind on the residue, a target harvesting machine or sub-system setting or a range of other parameters.

The operator of a mobile harvesting machine as aforesaid may then as desired adjust one or more variables of the residue spreading operation (such as but not limited to those mentioned herein, i.e. the degree of processing of the residue before it is spread; the energy and/or velocity of ejection of the residue, the angle or direction of spreading of the residue and so on; and/or other factors such as the speed and/or the direction of travel of the mobile harvesting machine) in order to optimise the residue spreading operation in accordance with one or more criteria.

To this end for example the interface device may be capable of providing advice to the operator of the mobile harvesting machine on adjustments that may be required in order to achieve optimal spreading. As one non-limiting example the interface device may display a message such as *"Increase vehicle speed to 10 km*/*h in order to maintain desired maximum spreading depth".* Another example may be a message relating to the direction of travel required in order to minimise the effect of a cross-wind. However it is not essential that the outputs of the interface device are verbal as described; and they may as suggested above take the form of lines and/or symbols that do not have a literary meaning. Combinations of words and symbols are possible within the scope of the disclosure. Coloured indications as explained herein also are possible, and may be combined with other forms of augmentation of the output of the interface as described herein.

Additionally or alternatively the apparatus may be employed in conjunction with automated adjustment features of the kinds referred to above. In such a case confidence on the part of machinery operators in the automated adjustment features may be improved by reason of the augmentation providing additional verification, over and above what an operator may witness directly, of residue spreading performance; and a range of additional parameters, such as but not limited to e.g. a target residue swath width and/or the regions spread with residue, may be automatically adjusted in dependence on the outputs of the apparatus. Use of the apparatus of the invention may be of particular benefit when as described a dust cloud largely or entirely prevents verification by eye of the spreading uniformity and coverage.

As disclosed but not explicitly claimed herein the mobile harvesting machine is or includes a ground-supported, mobile harvesting machine, and in particular may be a combine harvester, green bean harvester, green pea harvester or in some instances a beet/potato harvester.

According to the invention, the interface device is or includes a visual display that is visible to a human operator and that displays one or more images or other indicia of or relating to agricultural residue deposited by the mobile harvesting machine.

The term *"interface device"* is to be interpreted broadly herein, and relates to any device that is capable of conveying information about the residue spreading operation to a human operator. It is not necessary that the interface device is in addition capable of receiving inputs from the operator, although this is likely to be desirable. Hence the interface device may take the form of e.g. a touch screen or a display screen that is associated with an input device such as a keyboard or keypad.

Conveniently the one or more images may include one or more images of or representing the mobile harvesting machine, the one or more images being variable in dependence on one or more variable parameters of or pertaining to the mobile harvesting machine. As a non-limiting example of a variable parameter of this kind one may consider the width (or one or more other parameters) of a header fitted to the mobile harvesting machine. The precise type and size of header may be selected depending on a number of factors such as the crop that is to be harvested, the dimensions or other aspects of the field to be harvested and so on.

Further conveniently the apparatus may include one or more parameter input or detection devices that is capable of generating one or more signals indicative of the value of one or more variable parameters of or pertaining to the mobile harvesting machine. Hence the apparatus may be capable of automatically identifying (for example as a result of a *"handshake"* routine when the header is connected) e.g. the type or size of header fitted; or the header may include e.g. a bar code or QR code, that may be read by a reader fitted to the harvesting machine or using for instance a smartphone that is operatively connectable to the one or more processors, containing encoded information on such parameters; or the apparatus may include a human-operated input device by means of which an operator may input information such as header width data. The apparatus of the invention may then be arranged, e.g. through appropriate programming, to match the operation of residue spreading components to the parameter information that is input by way of the input device.

Notwithstanding the illustration of variable parameters of the harvesting machine in the form of header size information, such parameters are not limited in this way. A variety of parameters may be taken account of in ways similar to the foregoing.

It is not necessary moreover that the interface device produces a visible output. Additionally or alternatively therefore the interface device may generate outputs that are audible, vibratory, otherwise haptic or otherwise capable of being interpreted by a human operator. The interface may in embodiments influence an existing sub-system of the mobile vehicle. As a non-limiting example in this regard one may consider a haptic control device such as a motor-powered steering wheel in which the output of the interface device takes the form of a guiding force that is detectable by a human operator gripping the steering wheel and that encourages driving of the mobile harvesting machine in a direction that optimises residue deposition.

Notwithstanding the options for non-visual augmentation as described above, in embodiments the augmentation added to one or more said outputs optionally may be or may include one or more of: one or more lines overlain on a visual display; one or more symbols overlain on a visual display; one or more words overlain on a visual display; shading of part or all of a visual display; occlusion of part or all of a visual display; patterning or hatching of part or all of a visual display; brightening or intensifying of part or all of a visual display or colouring of part or all of a visual display. References herein to one or more lines being overlain on a visual display include the generation by the processor of one or more lines that are generated using the interface device so as to appear to be overlain on one or more images relating to the deposition of field residue. In particularly preferred embodiments the augmentation includes two or more lines overlain of the display. In such circumstances the lines may respectively represent left- and right-hand edges of a swath of deposited residue material, as further explained below.

Further consistently with the invention the one or more images is or include one or more of a video image, a mimic or simulation, an animation, a hybrid video-mimic/simulation, a hybrid video-animation, a hybrid mimic/simulation-animation or a static image.

Preferably when augmentation includes one or more lines overlain on a visual display the lines are such as to guide the deposition of residue resulting from control of the mobile harvesting machine by a human. As non-limiting examples in this regard the one or more lines may indicate one or more of: one or more edges, such as lateral edges, of an area and/or swath of deposited residue; one or more height/density (especially but not necessarily areal density) parameters of an area and/or swath of deposited residue; one or more cross-section of an area and/or swath of deposited residue; one or more field boundary; one or more boundary of a region of unharvested crop; one or more headland; one or more obstacle on the ground surface; one or more regions in which residue coverage is less or greater than desired; the strength and/or direction of prevailing wind; and/or the influence of a field slope on the deposition of residue. Such lines in some embodiments may be presented in combination with one or more messages, codes or numbers, for example as indicated above.

Conveniently the mobile harvesting machine may include one or more sources of motive power, one or more ground-engaging elements and one or more drive train elements whereby the mobile harvesting machine is capable of self-powered locomotion. However the invention is not limited to self-powered vehicles, and includes within its scope embodiments in which the mobile harvesting machine is powered by another machine, e.g. by reason of being towed behind another vehicle.

Preferably the agricultural residue depositing apparatus includes an operator's cab, and further preferably the interface device is within or supported by the operator's cab.

Notwithstanding this preference the interface device could be situated remotely from the harvesting machine that is performing the residue spreading operation. Hence it is possible for the interface device to exist e.g. in another vehicle, such as a tractor, to which the mobile harvesting machine is connected via a communications and/or control link; or for the interface device to be located in a fixed location such as at the edge of a field that is undergoing harvesting; or even in a remote location such as a farm office or data analysis centre. Furthermore it is within the scope of the disclosure hereof to provide more than one interface device, situated in different locations. The interface may exist as, or as part of, a so-called *"app"* installed on a mobile device such as a portable computer, smartphone or tablet device.

When provided the operator's cab may include one or more controls that are operatively connected to permit a human to modify one or more adjustable parameters of or relating to the deposition of residue based on one or more outputs of the interface device. Such parameters include but are not limited to those explained above, and in particular may be one or more selected from the list including the speed of ejection of residue from the mobile harvesting machine; the trajectory angle of ejection of the residue from the mobile harvesting machine; the height from which the residue is ejected from the mobile harvesting machine; the speed of the mobile harvesting machine; and the direction of travel of the mobile harvesting machine.

Further the mobile harvesting machine may include one or more adjustable cutter for comminuting the residue and the one or more controls optionally may permit varying of the degree of comminution of the residue by adjusting the cutter. Such varying typically would be based on the one or more outputs of the interface device.

The one or more sensors referred to above may include one or more sensors supported by the mobile harvesting machine; and/or by a further machine such as a vehicle. The further machine may be selected from the list including a mobile, ground-supported vehicle and/or an airborne vehicle. In some preferred embodiments the further vehicle may be an unmanned aerial vehicle (UAV) or *"drone".*

Combinations of different arrangements of mobile sensors may be employed. As a consequence it is possible for example for the sensors to comprise, say, a plurality of sensors mounted on a mobile vehicle and one or more sensors mounted on a UAV. A wide variety of sensor types and combinations will be considered by the person of skill in the art as lying within the scope of the disclosure hereof.

The disclosure hereof also extends to a method of depositing agricultural residue comprising steps of causing a mobile harvesting machine forming part of apparatus according to any of Claims 1 to 13 hereof to move on a ground surface while depositing agricultural residue on the ground surface, the deposition being adjusted in accordance with control commands input to the mobile harvesting machine by a human based on comprehension of one or more outputs of the interface device by the human, and the one or more outputs being augmented in one or more human-interpretable ways based on one or more signals, of or relating to agricultural residue deposited by the mobile harvesting machine, generated by the one or more sensors.

Such a method is likely to enjoy good acceptance by operators of harvesting machines since when embodied in practical ways it combines a believable output modification of a realistic image, such as a camera image, a mimic or a simulation with the ability of an operator to effect commands that alter the residue spreading output. The commands give rise to alteration of the modifications of the image in proportion to the degree of change required by the operator. Overall therefore this method may be trusted better than full automation of the residue spreading parameter adjustment. However as explained herein the apparatus and method of the invention also are capable of operation in a fully automated manner.

To the latter end the disclosure hereof extends to a method of depositing agricultural residue comprising steps of causing a mobile harvesting machine forming part of any of Claims 1 to 13 hereof to move on a ground surface while depositing agricultural residue on the ground surface, the deposition being adjusted in accordance with control commands generated by the one or more processors in dependence on one or more outputs of the one or more sensors of agricultural residue deposited or being deposited by the mobile harvesting machine, the one or more outputs of the interface device being augmented in one or more human-interpretable ways based on one or more signals, of or relating to agricultural residue deposited by the mobile harvesting machine, generated by the one or more sensors. Hence the human operator may in accordance with the disclosure monitor in an effective manner the operation of an automated control of residue deposition.

Preferably the method includes supporting one or more of the sensors of the agricultural residue spreading apparatus on the mobile harvesting machine and/or supporting one or more said sensors on a further vehicle that is moveable independently of the mobile harvesting machine.

Conveniently the interface device is or includes a visual display that is visible to a human operator and that displays one or more images of or relating to agricultural residue deposited by the mobile harvesting machine; and the method optionally includes augmenting the one or more outputs by including one or more lines overlain on the visual display; including one or more symbols overlain on the visual display; including one or more words overlain on the visual display; shading of part or all of the visual display; occlusion of part or all of the visual display; patterning or hatching of part or all of the visual display; brightening or intensifying of part or all of the visual display or colouring of part or all of the visual display. In preferred embodiments of the method the augmentation includes two or more lines, in like manner to the preferred two or more lines explained herein in connection with apparatus according to the invention.

In particularly preferred embodiments the one or more images is or includes one or more of a video image, a mimic/simulation, an animation, a hybrid video-mimic/simulation, a hybrid video-animation, a hybrid mimic/simulation-animation or a static image.

Conveniently when augmentation as aforesaid includes one or more lines overlain on the visual display the lines are such as to guide the deposition of residue resulting from control of the mobile vehicle by a human. Optionally the one or more lines when present indicate one or more of: one or more edges of an area and/or swath of deposited residue; one or more height parameters of an area and/or swath of deposited residue; one or more cross-section of an area and/or swath of deposited residue; one or more field boundary; one or more boundary of a region of unmown crop; one or more headland; and one or more obstacle on the ground surface; one or more regions in which residue coverage is less or greater than desired; the strength and/or direction of prevailing wind; and/or the influence of a field slope on the deposition of residue.

Preferably the method includes adjusting one or more parameters of deposition of residue in dependence on the control commands, the one or more parameters being or including one or more of the speed of ejection of residue from the mobile harvesting machine; the trajectory angle of ejection of the residue from the mobile harvesting machine; the height from which the residue is ejected from the mobile harvesting machine; the speed of the mobile harvesting machine; and the direction of travel of the mobile harvesting machine.

If the mobile harvesting machine includes one or more adjustable cutter for comminuting the residue the method preferably includes optional varying of the degree of comminution of the residue by adjusting the cutter. The degree of comminution can for example be adapted by changing the chopper speed, the number of knives inserted in the residue stream and the angle and/or degree of insertion of the knives.

The field residue spreader of a harvesting machine such as a combine harvester may take a variety of forms as exemplified in the documents summarised above. The disclosure hereof extends to mobile vehicles including all types of such spreaders as will occur to the person of skill in the art, and especially spreader designs in which left- and right-hand rotary impellers, that are adjustable as to the speed and angle of residue ejection, are included near the rear of a harvesting machine such as to be fed with residue particles from the crop processing path within the harvesting machine.

The method may include the step of carrying out at least first and second residue-spreading passes along a field or part of a field and in a said pass other than the first pass causing residue spreading so as to compensate, based on the augmentation of the one or more outputs, for deficient spreading of residue in the first pass. Further preferably the method may include operating an algorithm to determine one or more parameters of spreading so as to compensate for deficient spreading of residue in the first pass. Such an algorithm may be based for example on so-called *"proportional-integral-differential"* control methods, or other control methods as will occur to the person of skill in the art.

The disclosures hereof, and the invention, also extend to harvesting machines and the use thereof in which more than one residue system is present. In this regard it is known for some mobile harvesting machines, such as the New Holland CR Series machines, to include a spreading system for chopped straw and a further spreading system for other residue such as chaff. In one embodiment the apparatus disclosed herein may be operable to monitor chaff spreading and deposition in the ways described herein and a straw spreader may be separately operational to create swaths of straw.

There now follows a description of a preferred embodiment of the invention, by way of non-limiting example only, with reference being made to the accompanying drawings in which:
Figures 1 and 2 are schematic, plan views from above of a mobile harvesting machine in the form of a combine harvester moving in a field and illustrating (Figure 1) one form of residue spreading that may be regarded as optimal; and (Figure 2) a form of spreading that may be regarded as sub-optimal by reason of incomplete coverage of residue on the ground surface of the field;
Figure 3 shows agricultural residue depositing apparatus in accordance with an embodiment of the disclosure hereof;
Figure 4 shows in schematic form an exemplary output of an interface device that is augmented in accordance with a first, relatively simple, residue deposition method using agricultural residue spreading apparatus in accordance with the disclosure hereof and in accordance with a method also in accordance with the disclosure hereof;
Figure 5 is a similar view to Figure 4 and shows a modified mode of residue spreading in which the spread residue is laterally offset in order to avoid contamination of unharvested crop;
Figure 6 is a similar view to Figure 5 and shows a modified mode of residue spreading in accordance with the disclosure hereof and in which the spread residue is laterally offset in order to avoid both contamination of unharvested crop and spreading of residue beyond a field boundary as exemplified by a roadway;
Figure 7 shows in plan view a further operational residue spreading mode in accordance with the disclosure hereof and in which wind-caused under-spreading of residue in a first harvesting/spreading pass is compensated for in a second pass which may be undertaken by a second mobile harvesting machine or by one and the same mobile harvesting machine performing successive passes;
Figure 8 shows one example of the output of an interface device in accordance with the disclosure hereof and in which under-spreading as shown in Figure 7 is being corrected for;
Figure 9 shows another example of such an output including a residue spreading line profile simulation; and
Figure 10 shows a further example of a residue spreading mode in which residue deposition onto a tractor moving near a harvesting machine is avoided and subsequently compensated for.

In the following the terms *"mobile vehicle"* and *"mobile harvesting machine"* are used essentially synonymously.

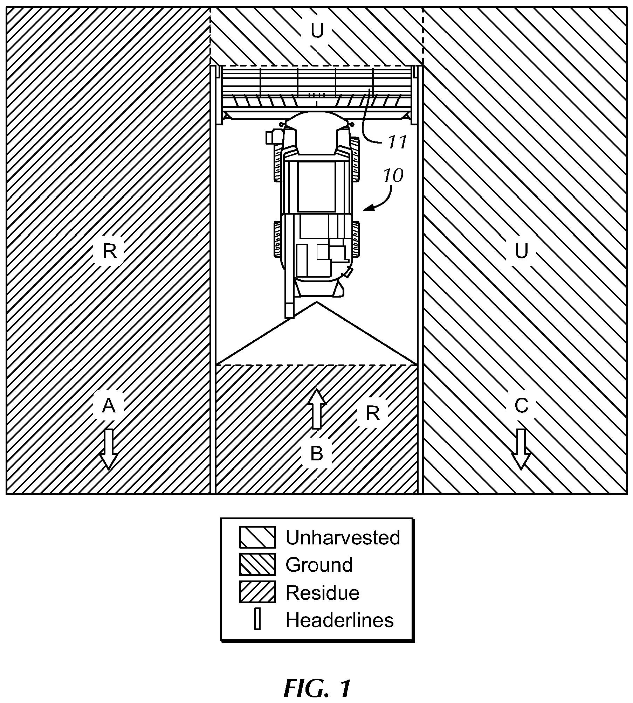

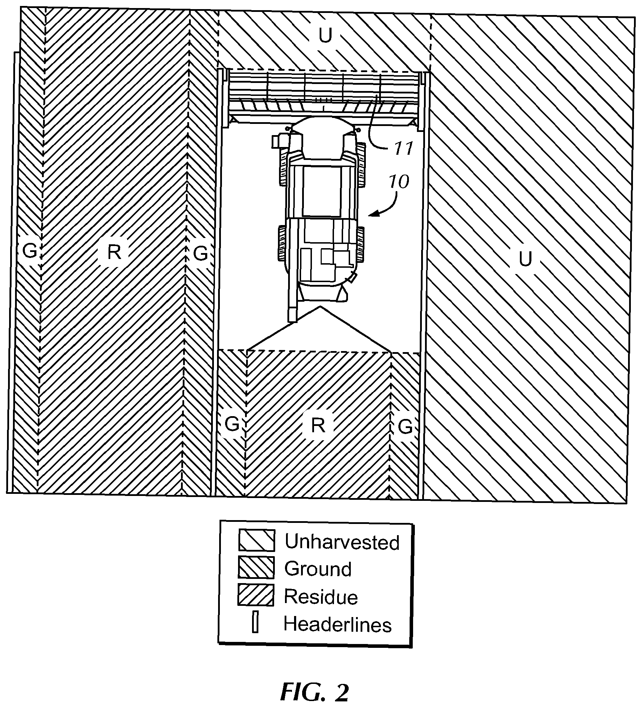

Referring to the drawings Figures 1 and 2 as noted are schematic plan views from above of agricultural residue depositing apparatus including a mobile vehicle in the form of a combine harvester 10. Figures 1 and 2 illustrate some of the problems that can arise during the spreading of field residue during harvesting operations.

The combine harvester 10 is illustrated in the process of harvesting a field (a small part of which is shown) and, as a consequence of harvesting operations, depositing field residue. The combine harvester 10 moves under power provided by *per se* known engine, driveline and ground-engaging element components in usually straight lines along a field (although non-straight lines, occasioned by field characteristics or chosen by an operator or control system, are not excluded). The field residue is deposited behind the combine harvester 10, as it travels, as a result of operation of a spreader that typically would adopt the dual-impeller design outlined above, or an alternative design.

In Figure 1 the combine harvester 10 has completed a first pass in the direction A along the field and is in the process of completing a second pass in the opposite direction B. The deposited residue R is darkly shaded in Figure 1 and occupies the full width and length of the first pass. The deposited residue also occupies the full width of the second pass behind the combine harvester 10. In front of the combine harvester 10 there is uncut crop U, which also occupies the area of a third pass of the combine harvester that is represented by arrow C and is harvested in the opposite direction to the second pass. For ease of viewing the uncut crop U is shaded more lightly than the residue R in Figure 1.

As is known, by repeatedly passing along the field in alternating directions as described it is possible for the combine harvester 10 to harvest the entire field while leaving deposited residue on the field surface. Such alternating direction passes may not occur as adjacent passes, notwithstanding that this is often the situation. On the contrary, it is known for a combine harvester to complete alternating passes that are separated by a width corresponding to a further pass that is to be completed subsequently. Such a mode of using a combine harvester is of benefit for example when the field margin or headland does not permit the harvesting machine to turn tightly such that it can complete immediately adjacent, alternate-direction passes along the field. Also certain harvesting machine header dimensions may dictate that alternating passes along a field initially are separated by lengths of uncut crop (that may be cut in subsequent passes).

Figure 1 shows what in many situations is optimal distribution of the residue R on the field. In Figure 1 the line of deposited residue R is of essentially the same width as the header 11 of the combine harvester and hence covers practically the whole area harvested by the combine harvester 10. The deposited residue R does not extend beyond the boundary of the field and does not spread into areas of uncut crop U.

Such a situation arises when the settings of the spreader are appropriate for the ballistic and aerodynamic properties of the residue and/or the residue is processed in a manner that is suited to the spreader included in the combine harvester 10; and when there is no significant influence of wind or a field slope on the distribution of residue particles.

However in the prior art it is commonplace for the uniform residue distribution of Figure 1 not to arise, and for distribution of field residue instead to be sub-optimal. One way in which this can be the case is illustrated in Figure 2.

Figure 2 is a similar schematic plan view from above to Figure 1. In Figure 2 the settings of the spreader of the combine harvester 10 are not correctly matched to the ballistic properties of the residue particles, and in particular the spreader does not impart enough energy to the lateral particle trajectories to give rise to complete coverage of the field (ground) surface. This can also happen when the combine harvester 10 faces wind in the direction along its travelling path, and in particular a headwind.

In other words the residue particles on ejection from the rear of the combine harvester 10 travel laterally (with respect to the combine harvester) so as only partly to cover the harvested area, in a central band as shown. This gives rise to lines of deposited residue R that are narrower than the width of the header 11, with exposed strips G of the ground at the margins of the deposited residue lines.

As may be inferred from the explanations above, this situation is associated with disadvantages. These potentially include excessive moisture evaporation from the exposed ground strips G, erosion of the soil of the exposed strips G, uneven distribution of nutrients as may pass from the residue to the soil of the field and exposure of plants germinating below ground level to adverse conditions that may be undesirable.

In practice a further form of defective covering by the residue of the field surface G may occur, in which lighter and/or less aerodynamic residue particles are thrown laterally from the spreader a lesser distance than heavier or more aerodynamic particles. This leads to differing concentrations of particle types when considering the lateral extent of the line of deposited residue, and/or heaping of the residue towards the centre of such a line. These situations also may be sub-optimal from the standpoint of the intended effects of the residue on agricultural operations.

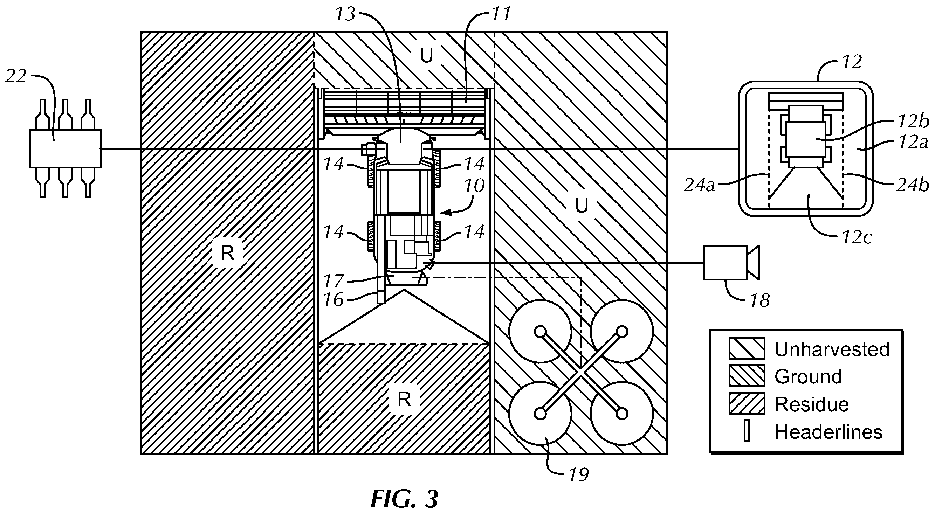

Figure 3 illustrates, in a similar schematic manner to Figures 1 and 2, agricultural residue depositing apparatus in accordance with an embodiment of the disclosure hereof.

Figure 3 shows a human-controllable mobile vehicle that in the illustrated embodiment is constituted as a combine harvester 10, but that may take a range of other forms as explained herein.

As is commonplace in such vehicles the combine harvester 10 is capable of movement over the surface of a field for the purpose of harvesting crop growing in the field. To this end the combine harvester 10 includes various features and sub-systems such as a header and reel assembly 11, an operator's cab 13, an engine, transmission, drive train and ground-engaging wheels 14 or tracks; internal crop plant processing machinery; a discharge spout 16 for discharging processed crop into e.g. a trailer that is towed behind a tractor moving from time to time alongside the combine harvester 10; and a residue spreader 17 for spreading field residue behind the combine harvester 10 as it moves forwardly in the field in order to harvest crop plants. Not all of these features and sub-systems are visible in Figure 3 but they all may readily be envisaged by the person of skill in the art.

The apparatus of Figure 3 includes an interface device that in the illustrated embodiment takes the form of a display screen 12 but may take a range of other forms as explained herein. The display screen 12 is capable of generating an output that is interpretable by a human. This can take the form of a camera image, mimic or simulation of the movement of the combine harvester 10 and its activity in depositing field residue.

In Figure 3 the output of the display screen 12 is a mimic or simulation 12a including an image 12b representing the combine harvester 10 and a visual indication 12c of the deposition of field residue at the rear of it. As explained however the output of the interface device may take a variety of alternative forms.

The display screen 12 in preferred embodiments is positioned in the cab 13 such that it is readily viewed by a human operator of the combine harvester 12 and is schematically illustrated as being hard-wired. The wiring connections of the display screen 12 may be such as to permit its repositioning within the cab, e.g. through the inclusion of a trailing or retractable data/signal cable. Alternatively the display screen 12 may be wirelessly connected.

It is not essential that the display screen 12 is positioned within the cab 13; and indeed in some embodiments the mobile vehicle forming part of the apparatus may be driverless and may omit an operator's cab. In other words the display screen or other interface device may be arranged to operate remotely of but operatively connected to the combine harvester 10 or other mobile vehicle forming part of the apparatus.

The output of the interface device is derived from operation of one or more sensors. In Figure 3 two, of many possible, options for such sensors are shown in the form of a vehicle-mounted camera or other sensor 18 and a UAV 19 that includes sensing equipment.

The vehicle-mounted camera/sensor 18 is shown in Figure 3 as being hard-wired as part of the illustrated apparatus and is in a preferred location at the rear of the combine harvester 10 such that its *"line of sight"* (this term referring to non-optical sensing arrangements as well as optical sensing devices and being interpreted accordingly) takes in the field residue that is in the process of being deposited behind the moving combine harvester 10. In other embodiments the one or more sensors may include one or more sensor such as camera 18 that is wirelessly connected. The camera/sensor can be mounted at any of a range of different heights at the rear of the combine harvester 10. It can for example be in a relatively high location, such as on top of the rear of the combine harvester 10, to permit viewing of the residue spreading from above; or it can be lower, such as at the same level or below the spreaders, to view the spreading at a lesser angle. It is moreover possible to devise embodiments in which the position of the camera/sensor is adjustable in order to change the view of the residue.

The camera/other sensor 18 operates to generate signals that are processed to create one or more images of the field residue while it is being deposited, or shortly after it has been deposited, behind the combine harvester 10. The images may be continuous video images, a series of still images or any of a range of other optical image types including images representing the degree of reflection or absorption of light. Further the camera 18 may be e.g. of a type that generates LIDAR signals or uses another laser-derived imaging technique; or it may be augmented or replaced by a device, such as an acoustic sensor, that operates in accordance with physical principals other than optical ones. Laser and non-optical sensor types, in particular radar, may be of particular benefit in avoiding the effects of the harvesting dust cloud as explained above.

Regardless of its precise type the sensor can comprise a 2D sensor array, or a 1D array sensor or a single point sensor having a scanning movement ability that can record a 2D image. The information recorded by the sensor can be combined with other information, in particular the sensor height and viewing angle, to reconstruct a usable view of the field residue on the field, for example a view from above or an isometric or perspective view that is easily understandable by the operator. Well-known image processing techniques such as but not limited to edge thresholding, curve fitting, signal filtering and peak energy detection can be used to improve the image quality, in particular to reduce noise and/or effects of ambient (light) conditions.

One non-limiting example of a sensor that could be employed in apparatus according to the invention is disclosed in EP 3145289 A, mentioned above, the disclosure of which is incorporated in its entirety herein.

As indicated in addition or as an alternative to a vehicle-mounted sensor such as camera 18 the apparatus of the invention may include one or more sensors that are mounted on or supported by one or more further vehicles. One exemplary embodiment of such a vehicle is shown in Figure 3 in the form of a UAV 19. This may support any of the sensor types described above and may be wirelessly connected, using any of a range of protocols, to the one or more processor 22. This is signified schematically in Figure 3 through the use of a dotted line connecting the UAV 19 to the combine harvester 10.

Instead of being supported by a UAV a remote, moveable sensor may be supported by another ground-based vehicle such as a tractor or other farming support vehicle

When the one or more sensors are constituted as or include optical cameras as described, it is not essential that they are stimulated in visible light wavelengths in order to produce the outputs described herein. On the contrary it is for example possible for the camera(s) to be infra-red cameras or other camera types that do not rely for operation on visible light wavelengths.

The images generated from the signals generated by the one or more sensors may be processed in real-time (or near-real-time) or with a delay, depending on the processing options adopted, and may include e.g. filtering to remove light wavelengths or other signal noise e.g. associated with the dust generated at the rear of a combine harvester during harvesting in dry conditions, filtering to remove excessive sunlight wavelengths that might otherwise overwhelm the generated signal(s) or cause confusing reflections, and other filtering options. To such ends the apparatus includes at least one processor that in Figure 3 is represented schematically by reference numeral 22 and may be located within the combine harvester. The processor 22 is operatively connected, e.g. by being either hard wired or wirelessly connected, to both the one or more sensors and the output device (display screen 12 in the illustrated embodiment).

In other embodiments the processor 22 may be positioned remotely of the combine harvester 10 e.g. in another vehicle or in a farm office or data centre, or in the *"cloud"*; and may in such a case be wirelessly connected to process the signals generated by the one or more sensors and generate the one or more images via the output device as referred to above.

More than one processor 22 may be provided as required; and combinations of processors mounted in or on the mobile vehicle and remotely thereof are within the scope of the disclosure.

Regardless of the precise sensor and processor combination adopted the described arrangement gives rise during harvesting to the generation of one or more outputs of the output device (display screen 12) in the form of one or more images of the residue as it is being deposited (e.g. while it is in flight)or shortly after being deposited on the ground. The processor 22 adds human-interpretable augmentation to the one or more images that assists a human operator to optimise the deposition of residue according to one or more criteria including but not limited to those variously described herein.

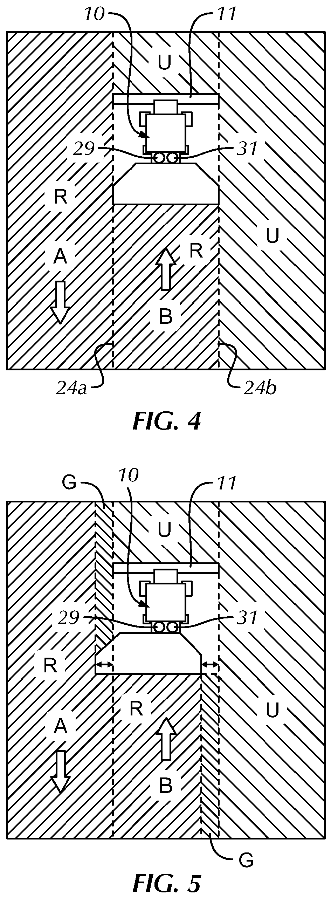

Referring now to Figure 4 an exemplary display output of the interface device is shown, and includes a simple form of augmentation, as mentioned herein, in the form of respective residue deposit boundary lines 24a, 24b. Figure 4 schematically shows one form of output of the interface device (display screen 12) in the form of a mimic or simulation of the combine harvester 10, the desired distribution of field residue R and the location of unharvested crop U.

The boundary lines 24a, 24b are in Figure 4 overlain on an image of the deposited residue generated using the display screen 12. The operator of the combine harvester 10 in response to such augmentation may adjust or, as necessary, maintain, one or more settings of the combine harvester with the aim of ensuring that the line image 12c representing the deposition of residue behind the combine harvester 10 is optimised in accordance with a chosen optimisation strategy.

The lateral separation of the lines 24a, 24b in Figure 4 is the same as the width of the header 11 of the combine harvester 10. The Figure 4 deposition optimisation strategy for this reason may be referred to as a *"match header width"* mode. In this strategy the aim is to ensure full coverage of the ground with deposited residue R as harvesting takes place, while avoiding contamination of unharvested crop U.

The adjustable settings as explained may include the speed and/or direction of the combine harvester 10, the angle at which the spreader distributes residue, the energy imparted by the spreader to the residue and the setting of a cutter that chops the residue particles to a predetermined size. The combine harvester 10 includes one or more controls that are not shown in the drawings but that may readily be envisaged for such purposes. Typically the one or more controls would be located within the operator's cab 13 although it is possible for such controls additionally or alternatively to be located elsewhere on the mobile vehicle, such as for example as part of an externally mounted control panel.

It is also possible for the one or more controls to be located remotely of the mobile vehicle and wirelessly connected to provide for the indicated settings adjustments. Examples of how to achieve this are described herein. Yet a further possibility is for the one or more controls to be part of a control panel that is connected or connectable to the mobile vehicle by way of an umbilical cable that allows for command and/or data transfer.

The controls may be of hardware types such as levers, foot pedals, wheels, knobs, other rotary controls, keypad/keyboard keys, sliders and switches; or they may be of software types such as features visible on a touchscreen or similar input device. Such a touchscreen may be or may form part of the display screen 12 or it may be separate therefrom. Combinations of hardware and software controls may be provided, in ways that will occur to those of skill in the art. Also, as noted, the optimisation may be implemented automatically with the augmentation features serving as confirmation for an operator of the operational mode adjustments rather than as prompts to encourage adjustments by the operator of the vehicle settings.

As explained Figure 4 shows a basic form of augmentation of the image of display screen 12 with simple yet human-interpretable lines intended to guide the deposition of field residue overlain on the residue image. More complex and/or sophisticated augmentation may include, as mentioned, one or more symbols overlain on the visual display; one or more words overlain on the visual display; shading of part or all of the visual display; occlusion of part or all of the visual display; patterning of part or all of the visual display; brightening or intensifying of part or all of the visual display or colouring of part or all of the visual display all in ways that are meaningful to a human operator and will guide the process of residue deposition in an optimal manner.

It is possible to effect such optimising in accordance with the full coverage example in Figure 1, or in accordance with other optimisation strategies; and some non-limiting further options of optimisation strategies are presented in Figures 5, 6 and 7.

The residue distribution optimisation shown in Figure 5 is a form of lateral offsetting strategy. In this the distribution of residue R is, as a result of settings implemented in a similar manner to that described above in response to augmentation added to the output of the interface device, laterally offset to one side (in the illustrated embodiment to the left, but it equally well could be to the right) relative to the longitudinal centre line of the harvesting rows, and therefore also the longitudinal centre line of the combine harvester 10.

This optimisation approach has the advantage of providing strips of the ground surface G to the right of the combine harvester 10 during each pass onto which no residue is deposited. This in turn means that there is no risk of contamination of the unharvested crop U constituting yet to be harvested rows by the field residue. This mode of operation may be of particular benefit if the residue might choke the crop intake parts of the combine harvester 10 and/or overload the internal machinery, and in particular the threshing and/or cleaning sections, of the harvester 10 if it was mingled with the unharvested crop U during a harvesting pass.

The apparatus and methods described herein permit a subsequent pass of the combine harvester 10 (Pass B in Figure 5) completed in accordance with the same lateral offsetting optimisation strategy as a previous pass (Pass A), but in the opposite direction thereto, to cause covering with deposited field residue R of the edge strips G of the ground surface that are (in the illustrated embodiment) left uncovered on the right hand side of the combine harvester 10. Hence by the time the combine harvester 10 has completed several passes, all but at most a single strip of uncovered ground (resulting from the last pass along the field) would receive a layer of deposited field residue R.

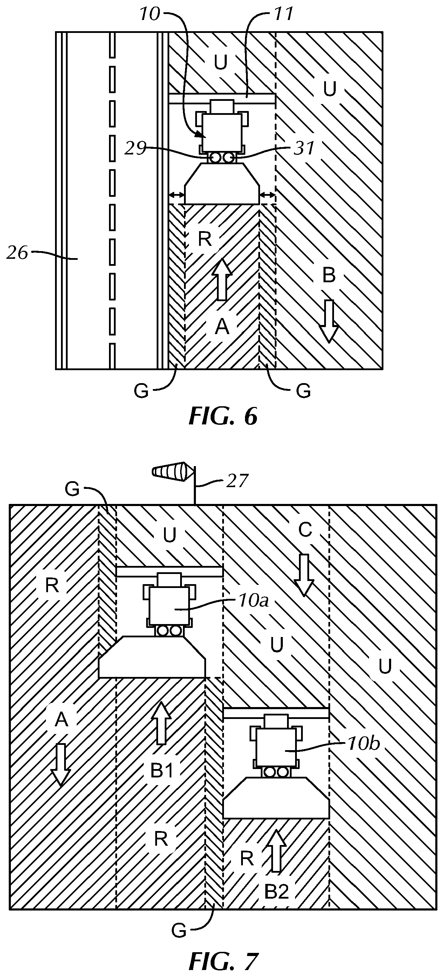

Figure 6 shows a variant on the Figure 5 strategy that may be termed a *"double offset"* method of operating the apparatus disclosed herein. In Figure 6 the deposited residue R is confined, as a result of the settings implemented by the operator of the combine harvester 10 in response to augmentation added to the output device; or as a result of automated operation as explained, to a central strip behind the combine harvester 10 that is narrower than the width of the header 11. This results in two strips of uncovered ground G to either side of the central strip of deposited residue.

Such a strategy may be of benefit when there is to either side of the combine harvester 10 a feature or zone that it is desired to maintain free of deposited residue. In Figure 6 these are exemplified by a roadway 26 to the left of the combine harvester 10; and a region of uncut crop U to the right. However as will be apparent from the disclosure hereof the strategy of offsetting the deposition of field residue R on both sides of the combine harvester 10 could be for a range of reasons other than those represented in Figure 6.

Adoption of the Figure 6 approach to residue deposition in the illustrated situation need occur for only a first pass (in direction A), since only during this pass is it desirable to avoid residue deposition up to the edge of the pass on both sides of the combine harvester 10. Once Pass A is completed therefore the apparatus may switch (or be switched through control actions effected by the operator) to e.g. the mode of Figure 5, in which offsetting only to one side occurs, during subsequent harvesting activity.

It is not necessary for a single optimisation mode to be adopted for the whole of each pass along the field. Hence if (using the example of Figure 6) the roadway 26 extends close to the field only for part of the length of Pass A it would not be necessary to adopt the double offset optimisation method for the whole of that pass. Instead the operational mode could be switched to that of Figure 5, or another mode, part-way along Pass A.

In like manner to the Figure 5 optimisation that illustrated in Figure 6 also could be implemented through automated responding of the mobile harvesting machine to the sensor outputs (or derivatives or parts thereof), with the visual augmentation serving primarily a confirmatory purpose.

Figure 7 shows another way in which sub-optimal deposition of field residue may arise.

In Figure 7 undesired lateral offsetting of the deposition of residue may occur because of a weather phenomenon such as a cross-wind and/or a geographical feature such as a field slope. Such influences are represented schematically in Figure 7 by wind sock 27. They can result in uncontrolled under-coverage of deposited field residue R leaving strips G of uncovered ground the boundaries of which vary as illustrated along the respective passes of the combine harvester 10 along the field.

The optimisation mode to be adopted in accordance with the disclosure hereof in such a situation may include augmenting the output of an interface device in a manner encouraging the deposition of field residue during subsequent passes that compensates for incomplete coverage in previous passes.

In Figure 7 a first combine harvester 10a has completed an initial pass (Pass A) in which the described incomplete coverage has occurred, and is in the process of compensating for this during a second pass (Pass B1) along the field with the settings of the combine harvester 10a ensuring that the coverage of residue is complete in the area harvested during Pass A.

As is shown in Figure 7 this results in a further strip of incomplete coverage G to the right of the residue coverage caused by Pass B1. This in turn may be compensated for through use of a second combine harvester 10b completing a third pass (Pass B2) in the same direction as and slightly behind combine harvester 10a when completing Pass B1.

In order for a second combine harvester 10b to proceed as explained it is necessary for the residue deposition information acquired by the first combine harvester 10a to be shared with the second combine harvester 10b. This can be achieved through the first and second combine harvesters 10a, 10b being capable of mutual (wireless) communication; or though storing of the information acquired by the first combine harvester 10a in a *"cloud"* or other commonly (to the respective harvesting machines 10a, 10b) accessible store from where it can be accessed by the second combine harvester 10b.

More generally, embodiments as disclosed herein are highly likely to be capable of storing information derived from the outputs of the one or more sensors. This can be for example through the use of on-board memory forming part of the combine harvester 10; or remote memory forms such as but not limited to flash memory devices, remote or disconnectable computing devices such as smartphones, laptop computers or tablet devices; or through use of cloud-based memory as indicated.

The presence of such memory facilities allows among other things the building-up of a map of residue deposition in a chosen field. This may be useful in a number of ways, one of which is to provide information some time after harvesting has been completed on the amount and distribution of spread residue in the field.

If a second combine harvester is not present the combine harvester 10a may instead complete a third pass (Pass C) in the opposite direction to Pass B1 in order to compensate for the incomplete residue coverage. During Pass C (if it is undertaken) the output of the interface device would be augmented in a way encouraging adjustment of the settings of the combine harvester 10a such that offsetting of the deposited field residue would occur to the opposite side of the centre line of the pass and the combine harvester to that of Pass B1 (i.e. to the right of the combine harvester in the example described) since otherwise the incompletely covered ground G would not receive a layer of residue R.

As mentioned, although in some modes of operation the various passes of the combine harvester(s) 10 may extend directly adjacent one another, it is also possible for one or more un-harvested strips of regions (that typically would be of the width of a harvesting pass, although this need not necessarily be the case) to be left, at least initially, with such strips or regions being subsequently harvested as explained herein. As will be apparent to the person of skill in the art, numerous combinations of pass locations, directions and timings are possible and it is not essential that the combine harvester(s) 10 work from one side of a filed to the other without variations in the harvesting (And residue depositing) regime.

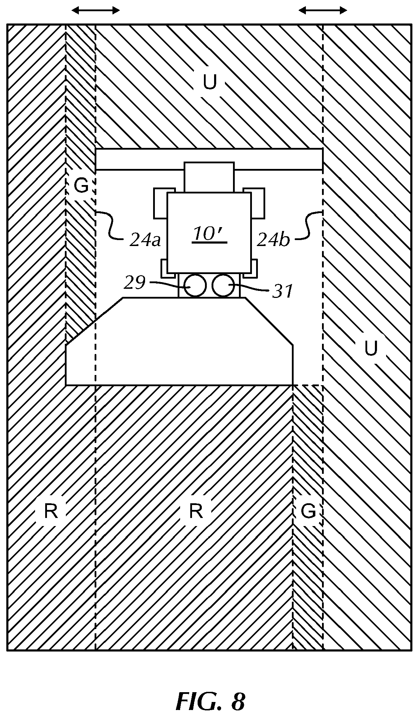

The output of an interface device such as display screen 12 during the operational mode exemplified in Figure 7 is shown in Figure 8. The output consists essentially of a mimic or simulation 10' of the combine harvester 10a together with augmentation of the output by way of residue deposition boundary target lines 24a, 24b. These are similar to the lines 24a, 24b of Figure 4 and as indicated by arrows may move laterally in response to the detected residue coverage R. The operator of the combine harvester 10a may respond to the movement of the boundary lines 24a, 24b by adjusting one or more settings in order to ensure coverage of residue in the incompletely covered strip G that results from the influence of the wind and/or slope as described.

Additionally or alternatively, as indicated herein, the combine harvester(s) 10 may respond to the outputs of the sensor(s) in an automated mode, in which adjustments of the various parameters of residue spreading occur automatically in accordance with one or more control algorithms. In such a case the primary purpose of the display screen 12 may be to provide confirmation to the operator of the harvesting machine that residue spreading is occurring in a desired or optimal manner.

Switching between automated and manually controlled modes of operation may be provided for, and the combine harvester may include one or more controls (that may be physical controls or may exist in software e.g. as touch screen icons) for this purpose.

Any of the modes of operation described herein may include augmentation that is variable for example in the manner of lateral offsetting of the boundary line positions as explained above. Any literary or numerical augmentation of the output of the interface device may also be variable, with updates of the augmentation occurring in dependence on the output signals of the one or more sensors that detect the deposition of residue on the ground.

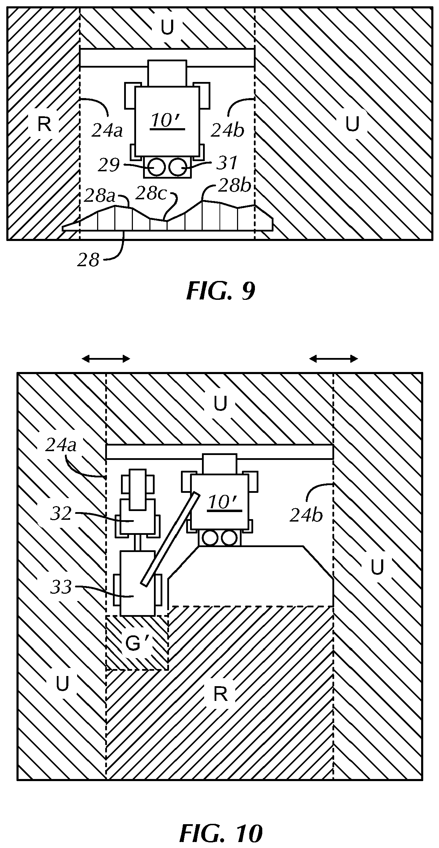

Another form of output of the interface device forming part of the disclosed apparatus is shown in Figure 9. In this figure the output image includes a histogram-style display element 28, in addition to the display features such as those shown in Figure 8, indicating the transverse cross-section of the deposited residue. This cross-section may alter over time as the combine harvester 10 moves along the field and the coverage of the residue varies.

Although in many situations even coverage of residue on the ground may be desired, equally it may be desirable for the cross-section of the deposited residue not to be constant from one side of the deposited residue area to the other. An example of this is shown in Figure 9, in which two laterally offset residue height peaks 28a, 28b are separated from one another in the lateral direction by a central region 28c in which the depth of residue coverage is less than at the peaks. The method of operating the apparatus described herein may include adjusting the settings of one or more settable parts of the apparatus in order to achieve, or more typically prevent as being sub-optimal, this and/or alternative coverage depth variation effects.

Figures 8 and 9 clearly show in the simulation 10' of the combine harvester 10 the presence of left and right residue impellers 29, 31. The simulation (interface device output) may include e.g. displays of information concerning the operation and settings of these. For instance the simulation may include information on the respective rotational speeds of the impellers and/or the angles at which residue is ejected from them, these being settable parameters that influence the coverage of residue on the ground. The output may include target values for such parameters that are consistent with a particular optimisation strategy such as but not limited to those described herein. A further optional aspect of the method of the invention is illustrated in Figure 10. In this figure the output of the interface device may include objects such as a tractor 32 that is moving in the field alongside the combine harvester 10 and tows a trailer 33. The augmentation of the output of the interface device can be such as to guide the operator of the combine harvester e.g. so as to avoid distributing residue onto the tractor 32 and trailer 33, or to take account of the influence of the tractor 32 and trailer 33 on the distribution of residue. As indicated by arrows in Figure 10 and as in the embodiments described above the augmentation may be variable in a wide variety of ways in order to convey desired target residue coverage information.

The operational method of Figure 10 may result in a strip G' of uncovered ground, but this is likely to be relatively short because the tractor typically during harvesting activity would travel alongside the combine harvester only for long enough for the content of the grain tank of the combine harvester to empty into the trailer 33. The uncovered ground surface G' can if desired be covered with residue as a result of a compensation method, that is similar to that shown in Figures 7 and 8, during a subsequent pass of the combine harvester 10 along the field.

Overall as explained the apparatus and methods described herein provide for a dependable way of ensuring desired residue deposition results, optionally in a manner that improves confidence in automated systems that may be provided. The apparatus and methods may give rise to the generation of simulations that, as a result of the sensors employed and/or the filtering of their output signals, avoids the visual inspection problems extant in the prior art, especially when harvesting activity takes place in dusty field conditions.

The listing or discussion of an apparently prior-published document in this specification should not necessarily be taken as an acknowledgement that the document is part of the state of the art or is common general knowledge.

## Claims

1. Agricultural residue depositing apparatus comprising a mobile harvesting machine (10) that is capable of generating agricultural residue and depositing it on a ground surface over which the mobile harvesting machine is moveable, the mobile harvesting machine including an interface device (12) that is capable of generating one or more output that is interpretable by a human operator; the apparatus including one or more sensors (18, 19) of agricultural residue deposited or being deposited by the mobile harvesting machine and one or more processors to which the one or more sensors are operatively connected, the one or more processors additionally being operatively connected to the interface device such that the interface device generates one or more outputs, based on one or more signals generated by the one or more sensors, of or relating to agricultural residue deposited by the mobile harvesting machine; and the one or more processors being capable of adding human-interpretable augmentation (24a, 24b) to one or more said outputs indicating one or more parameters of or relating to the deposition of residue, wherein the interface device (12) is or includes a visual display that is visible to a human operator and that displays one or more images of or relating to agricultural residue deposited by the mobile harvesting machine, wherein the one or more images is or includes one or more of a video image, a mimic/simulation, an animation, a hybrid video-mimic/simulation, a hybrid video-animation, a hybrid mimic/simulation-animation or a static image of the residue as it is undergoing spreading, or immediately following spreading, behind the mobile harvesting machine.

2. Agricultural residue depositing apparatus according to Claim 1 wherein the one or more images includes one or more images of or representing the mobile harvesting machine (10), the one or more images being variable in dependence on one or more variable parameters of or pertaining to the mobile harvesting machine.

3. Agricultural residue depositing apparatus according to Claim 2 including one or more parameter input devices that is capable of generating one or more signals indicative of the value of one or more variable parameters of or pertaining to the mobile harvesting machine (10).

4. Agricultural residue depositing apparatus according to Claim 3 or any preceding claim depending therefrom wherein the augmentation (24a, 24b) added to one or more said outputs is or includes one or more of: one or more, and preferably two or more, lines overlain on the visual display; one or more symbols overlain on the visual display; one or more words overlain on the visual display; shading of part or all of the visual display; occlusion of part or all of the visual display; patterning of part or all of the visual display; brightening or intensifying of part or all of the visual display or colouring of part or all of the visual display.

5. Agricultural residue depositing apparatus according to Claim 4 wherein when augmentation (24a, 24b) includes one or more lines overlain on the visual display the lines are such as to guide the deposition of residue resulting from control of the mobile harvesting machine (10) by a human.

6. Agricultural residue depositing apparatus according to Claim 5 wherein the one or more lines indicate one or more of: one or more edges of an area and/or swath of deposited residue; one or more height parameters of an area and/or swath of deposited residue; one or more cross-section of an area and/or swath of deposited residue; one or more field boundary; one or more boundary of a region of unmown crop; one or more headland; one or more obstacle on the ground surface; one or more regions in which residue coverage is less or greater than desired; the strength and/or direction of prevailing wind; and/or the influence of a field slope on the deposition of residue.

7. Agricultural residue depositing apparatus according to any preceding claim including an operator's cab (13), wherein the interface device (12) is within or supported by the operator's cab; and wherein the operator's cab includes one or more controls that are operatively connected to permit a human to modify one or more adjustable parameters of or relating to the deposition of residue based on one or more outputs of the interface device.

8. Agricultural residue depositing apparatus according to Claim 7 wherein the one or more adjustable parameter of or relating to the deposition of residue is or includes one or more of the speed of ejection of residue from the mobile harvesting machine (10); the trajectory angle of ejection of the residue from the mobile harvesting machine; the height from which the residue is ejected from the mobile harvesting machine; the speed of the mobile harvesting machine; and the direction of travel of the mobile harvesting machine.

9. Agricultural residue depositing apparatus according to Claim 7 or Claim 8 wherein the mobile harvesting machine (10) includes one or more adjustable cutter for comminuting the residue and wherein the one or more controls permits varying of the degree of comminution of the residue by adjusting the cutter.

10. Agricultural residue depositing apparatus according to any preceding claim wherein the one or more sensors (18, 19) includes one or more sensors supported by the mobile harvesting machine (10) and/or one or more sensors supported by a further machine.

11. Agricultural residue depositing apparatus according to Claim 10 wherein when present the further machine is selected from the list including a mobile, ground-supported vehicle and/or an airborne vehicle.

12. A method of depositing agricultural residue comprising steps of causing a mobile harvesting machine (10) forming part of apparatus according to any preceding claim to move on a ground surface while depositing agricultural residue on the ground surface, the deposition being adjusted in accordance with control commands input to the mobile harvesting machine by a human based on comprehension of one or more outputs of the interface device (12) by the human, and the one or more outputs being augmented in one or more human-interpretable ways based on one or more signals, of or relating to agricultural residue deposited by the mobile harvesting machine, generated by the one or more sensors (18, 19), wherein the interface device (12) is or includes a visual display that is visible to a human operator and that displays one or more images of or relating to agricultural residue deposited by the mobile harvesting machine, wherein the one or more images is or includes one or more of a video image, a mimic/simulation, an animation, a hybrid video-mimic/simulation, a hybrid video-animation, a hybrid mimic/simulation-animation or a static image of the residue as it is undergoing spreading, or immediately following spreading, behind the mobile harvesting machine.

13. A method of depositing agricultural residue comprising steps of causing a mobile harvesting machine (10) forming part of any of Claims 1 to 11 hereof to move on a ground surface while depositing agricultural residue on the ground surface, the deposition being adjusted in accordance with control commands generated by the one or more processors in dependence on one or more outputs of the one or more sensors (18, 19) of agricultural residue deposited or being deposited by the mobile harvesting machine, the one or more outputs of the interface (12) device being augmented in one or more human-interpretable ways based on one or more signals, of or relating to agricultural residue deposited by the mobile harvesting machine, generated by the one or more sensors, wherein the interface device (12) is or includes a visual display that is visible to a human operator and that displays one or more images of or relating to agricultural residue deposited by the mobile harvesting machine, wherein the one or more images is or includes one or more of a video image, a mimic/simulation, an animation, a hybrid video-mimic/simulation, a hybrid video-animation, a hybrid mimic/simulation-animation or a static image of the residue as it is undergoing spreading, or immediately following spreading, behind the mobile harvesting machine.

14. A method according to Claim 12 or Claim 13 including supporting one or more said sensors on the mobile harvesting machine (10) and/or on a further vehicle that is moveable independently of the mobile harvesting machine.

15. A method according to any of Claims 12 to 14 including augmenting the one or more outputs by including one or more, and preferably two or more, lines overlain on the visual display; including one or more symbols overlain on the visual display; including one or more words overlain on the visual display; shading of part or all of the visual display; occlusion of part or all of the visual display; patterning of part or all of the visual display; brightening or intensifying of part or all of the visual display or colouring of part or all of the visual display.

16. A method according to Claim 15 wherein when augmentation (24a, 24b) includes one or more lines overlain on the visual display the method includes using the lines to guide the deposition of residue resulting from control of the mobile harvesting machine (10) by a human.

17. A method according to Claim 16 wherein the one or more lines indicate one or more of: one or more edges of an area and/or swath of deposited residue; one or more height parameters of an area and/or swath of deposited residue; one or more cross-section of an area and/or swath of deposited residue; one or more field boundary; one or more boundary of a region of unharvested crop; one or more headland; and one or more obstacle on the ground surface; one or more regions in which residue coverage is less or greater than desired; the strength and/or direction of prevailing wind; and/or the influence of a field slope on the deposition of residue.

18. A method according to any of Claims 12 to 17 including adjusting one or more parameters of deposition of residue in dependence on the control commands, the one or more parameters being or including one or more of the speed of ejection of residue from the mobile harvesting machine (10); the trajectory angle of ejection of the residue from the mobile harvesting machine; the height from which the residue is ejected from the mobile harvesting machine; the speed of the mobile harvesting machine; and the direction of travel of the mobile harvesting machine.

19. A method according to any of Claims 12 to 18 wherein the mobile harvesting machine (10) includes one or more adjustable cutter for comminuting the residue and wherein the method includes varying of the degree of comminution of the residue by adjusting the cutter.

20. A method according to any of Claims 12 to 19 including the step of carrying out at least first and second residue-spreading passes along a field or part of a field and in a said pass other than the first pass causing residue spreading so as to compensate, based on the augmentation of the one or more outputs, for deficient spreading of residue in the first pass.

21. A method according to Clam 20 including operation of an algorithm to determine one or more parameters of spreading so as to compensate for deficient spreading of residue in the first pass.

## Patentansprüche

1. Einrichtung zum Ablagern von landwirtschaftlichen Rückständen, umfassend eine mobile Erntemaschine (10), die dazu geeignet ist, landwirtschaftliche Rückstände zu erzeugen und diese auf einer Bodenoberfläche abzulagern, über welche die mobile Erntemaschine bewegbar ist, wobei die mobile Erntemaschine eine Schnittstellenvorrichtung (12) umfasst, die dazu geeignet ist, eine oder mehrere Ausgaben zu erzeugen, die von einem menschlichen Bediener interpretierbar sind; wobei die Einrichtung einen oder mehrere Sensoren (18, 19) für landwirtschaftliche Rückstände, die von der mobilen Erntemaschine abgelagert wurden oder abgelagert werden, und einen oder mehrere Prozessoren einschließt, mit denen der eine oder die mehreren Sensoren funktionell verbunden sind, wobei der eine oder die mehreren Prozessoren zusätzlich funktionell mit der Schnittstellenvorrichtung verbunden sind, so dass die Schnittstellenvorrichtung eine oder mehrere Ausgaben erzeugt, basierend auf einem oder mehreren Signalen, die von dem einen oder den mehreren Sensoren erzeugt werden, von oder bezüglich landwirtschaftlicher Rückstände, die von der mobilen Erntemaschine abgelagert wurden; und wobei der eine oder die mehreren Prozessoren dazu geeignet sind, von Menschen interpretierbare Augmentierung (24a, 24b) zu einem oder mehreren der besagten Ausgaben hinzuzufügen, die einen oder mehrere Parameter der Ablagerung von Rückständen oder in Bezug auf die Ablagerung von Rückständen anzeigen, wobei die Schnittstellenvorrichtung (12) eine visuelle Anzeige ist oder einschließt, die für einen menschlichen Bediener sichtbar ist und die ein oder mehrere Bilder von landwirtschaftlichen Rückständen oder in Bezug auf landwirtschaftliche Rückstände anzeigt, die von der mobilen Erntemaschine abgelagert wurden, wobei das eine oder die mehreren Bilder eines oder mehrere ist oder einschließt von einem Videobild, einer Nachbildung/Simulation, einer Animation, einer hybriden Video-Nachbildung/Simulation, einer hybriden Video-Animation, einer hybriden Nachbildung/Simulation-Animation oder einem statischen Bild der Rückstände, während sie hinter der mobilen Erntemaschine der Verteilung unterzogen werden, oder unmittelbar nach der Verteilung.

2. Einrichtung zum Ablagern von landwirtschaftlichen Rückständen nach Anspruch 1, wobei das eine oder die mehreren Bilder ein oder mehrere Bilder der mobilen Erntemaschine (10) oder diese darstellende Bilder einschließen, wobei das eine oder die mehreren Bilder in Abhängigkeit von einem oder mehreren variablen Parametern der mobilen Erntemaschine oder zu dieser gehörenden Parametern veränderlich sind.

3. Einrichtung zum Ablagern von landwirtschaftlichen Rückständen nach Anspruch 2, einschließend eine oder mehrere Parametereingabevorrichtungen, die dazu geeignet sind, ein oder mehrere Signale zu erzeugen, die den Wert eines oder mehrerer variabler Parameter der mobilen Erntemaschine (10) oder die sich auf diese beziehen, anzeigen.

4. Einrichtung zum Ablagern von landwirtschaftlichen Rückständen nach Anspruch 3 oder einem der vorstehenden Ansprüche, der davon abhängt, wobei die Augmentation (24a, 24b), die zu einer oder mehreren der Ausgaben hinzugefügt wird, eines oder mehrere ist oder einschließt von: einer oder mehreren, und vorzugsweise zwei oder mehreren, auf der visuellen Anzeige überlagerten Linien; einem oder mehreren Symbolen, die auf der visuellen Anzeige überlagert sind; einem oder mehreren Worten, die auf der visuellen Anzeige überlagert sind; Schattieren eines Teils oder der gesamten visuellen Anzeige; Verdecken eines Teils oder der gesamten visuellen Anzeige; Strukturieren eines Teils oder der gesamten visuellen Anzeige; Aufhellen oder Intensivieren eines Teils oder der gesamten visuellen Anzeige oder Einfärben eines Teils oder der gesamten visuellen Anzeige.

5. Einrichtung zum Ablagern von landwirtschaftlichen Rückständen nach Anspruch 4, wobei, wenn die Augmentation (24a, 24b) eine oder mehrere Linien einschließt, die auf der visuellen Anzeige überlagert sind, die Linien wie eine Führung für die Ablagerung von Rückständen sind, die aus der Steuerung der mobilen Erntemaschine (10) durch einen Menschen resultiert.

6. Einrichtung zum Ablagern von landwirtschaftlichen Rückständen nach Anspruch 5, wobei die eine oder mehreren Linien eines oder mehrere anzeigen von: einem oder mehreren Rändern eines Bereichs und/oder Schwads von abgelegten Rückständen; einem oder mehreren Höhenparametern eines Bereichs und/oder Schwads von abgelagerten Rückständen; einem oder mehreren Querschnitten eines Bereichs und/oder Schwads von abgelagerten Rückständen; einer oder mehreren Feldgrenzen; einer oder mehrerer Grenzen eines Bereichs von ungemähtem Erntegut; einem oder mehreren Vorgewenden; einem oder mehreren Hindernissen auf der Bodenoberfläche; einer oder mehreren Regionen, in denen die Rückstandsabdeckung geringer oder größer als gewünscht ist; der Stärke und/oder Richtung des vorherrschenden Windes; und/oder dem Einfluss einer Feldneigung auf die Ablagerung von Rückständen.

7. Einrichtung zum Ablagern von landwirtschaftlichen Rückständen nach einem der vorstehenden Ansprüche, die eine Fahrerkabine (13) einschließt, wobei die Schnittstellenvorrichtung (12) sich innerhalb der Fahrerkabine befindet oder von der Fahrerkabine getragen wird; und wobei die Fahrerkabine eine oder mehrere Steuerungen einschließt, die funktionell verbunden sind, um einem Menschen zu ermöglichen, einen oder mehrere einstellbare Parameter der Ablagerung von Rückständen oder in Bezug auf diese basierend auf einem oder mehreren Ausgaben der Schnittstellenvorrichtung zu modifizieren.

8. Einrichtung zum Ablagern von landwirtschaftlichen Rückständen nach Anspruch 7, wobei der eine oder die mehreren einstellbaren Parameter von oder bezüglich der Ablagerung von Rückständen eines oder mehrere ist oder einschließt von der Geschwindigkeit des Auswurfs von Rückständen aus der mobilen Erntemaschine (10); dem Bahnwinkel des Auswurfs der Rückstände aus der mobilen Erntemaschine; der Höhe, aus der die Rückstände von der mobilen Erntemaschine ausgestoßen werden; der Geschwindigkeit der mobilen Erntemaschine; und der Fahrtrichtung der mobilen Erntemaschine.

9. Einrichtung zum Ablagern von landwirtschaftlichen Rückständen nach Anspruch 7 oder Anspruch 8, wobei die mobile Erntemaschine (10) ein oder mehrere einstellbare Schneidwerke zum Zerkleinern der Rückstände einschließt und wobei die eine oder mehreren Steuerungen eine Variation des Zerkleinerungsgrades der Rückstände durch Einstellen des Schneidwerks ermöglichen.

10. Einrichtung zum Ablagern von landwirtschaftlichen Rückständen nach einem der vorstehenden Ansprüche, wobei der eine oder die mehreren Sensoren (18, 19) einen oder mehrere Sensoren, die von der mobilen Erntemaschine (10) getragen werden, und/oder einen oder mehrere Sensoren, die von einer weiteren Maschine getragen werden, einschließen.

11. Einrichtung zum Ablagern von landwirtschaftlichen Rückständen nach Anspruch 10, wobei, wenn vorhanden, die weitere Maschine aus der Liste ausgewählt ist, die ein mobiles, bodengestütztes Fahrzeug und/oder ein luftgestütztes Fahrzeug einschließt.

12. Verfahren zum Ablagern von landwirtschaftlichen Rückständen, umfassend Schritte des Veranlassens einer mobilen Erntemaschine (10), die Teil einer Einrichtung nach einem der vorstehenden Ansprüche ist, sich auf einer Bodenoberfläche zu bewegen, während landwirtschaftliche Rückstände auf der Bodenoberfläche abgelagert werden, wobei die Ablagerung in Übereinstimmung mit Steuerbefehlen angepasst wird, die von einem Menschen basierend auf dem Verständnis einer oder mehrerer Ausgaben der Schnittstellenvorrichtung (12) durch den Menschen in die mobile Erntemaschine eingegeben werden, und wobei die eine oder mehreren Ausgaben auf eine oder mehrere menschlichinterpretierbare Weisen basierend auf einem oder mehreren Signalen, von oder bezüglich landwirtschaftlichen Rückständen, die von der mobilen Erntemaschine abgelagert werden, die von dem einen oder den mehreren Sensoren (18, 19) erzeugt werden, augmentiert werden, wobei die Schnittstellenvorrichtung (12) eine visuelle Anzeige ist oder einschließt, die für einen menschlichen Bediener sichtbar ist und die ein oder mehrere Bilder von oder bezüglich landwirtschaftlichen Rückständen, die von der mobilen Erntemaschine abgelagert werden, anzeigt, wobei das eine oder die mehreren Bilder eines oder mehrere sind oder einschließen von einem Videobild, einer Nachbildung/Simulation, einer Animation, einer hybriden Video-Nachbildung/Simulation, einer hybriden Video-Animation, einer hybriden Nachbildung/Simulation-Animation oder einem statischen Bild der Rückstände, während sie hinter der mobilen Erntemaschine einer Verteilung unterzogen werden, oder unmittelbar nach der Verteilung.

13. Verfahren zum Ablagern von landwirtschaftlichen Rückständen, umfassend Schritte des Veranlassens einer mobilen Erntemaschine (10), die Teil eines der Ansprüche 1 bis 11 hiervon ist, sich auf einer Bodenoberfläche zu bewegen, während landwirtschaftliche Rückstände auf der Bodenoberfläche abgelagert werden, wobei die Ablagerung in Übereinstimmung mit Steuerbefehlen angepasst wird, die von dem einen oder den mehreren Prozessoren in Abhängigkeit von einem oder mehreren Ausgaben des einen oder der mehreren Sensoren (18, 19) von landwirtschaftlichen Rückständen, die von der mobilen Erntemaschine abgelagert wurden oder abgelagert werden, erzeugt werden, wobei der eine oder die mehreren Ausgaben der Schnittstellenvorrichtung (12) in einer oder mehreren menschlich interpretierbaren Weisen basierend auf einem oder mehreren Signalen, von oder bezogen auf landwirtschaftliche Rückstände, die von der mobilen Erntemaschine abgelagert werden, die von dem einen oder den mehreren Sensoren erzeugt werden, augmentiert werden, wobei die Schnittstellenvorrichtung (12) eine visuelle Anzeige ist oder einschließt, die für einen menschlichen Bediener sichtbar ist und die ein oder mehrere Bilder von oder bezogen auf landwirtschaftliche Rückstände, die von der mobilen Erntemaschine abgelagert werden, anzeigt, wobei das eine oder die mehreren Bilder eines oder mehrere sind oder einschließen von einem Videobild, einer Nachbildung/Simulation, einer Animation, einer hybriden Video-Nachbildung/Simulation, einer hybriden Video-Animation, einer hybriden Nachbildung/Simulation-Animation oder einem statischen Bild der Rückstände, während sie hinter der mobilen Erntemaschine einer Verteilung unterzogen werden, oder unmittelbar nach der Verteilung.

14. Verfahren nach Anspruch 12 oder Anspruch 13, einschließlich Tragen eines oder mehrerer der Sensoren an der mobilen Erntemaschine (10) und/oder an einem weiteren Fahrzeug, das unabhängig voneinander von der mobilen Erntemaschine bewegbar ist.

15. Verfahren nach einem der Ansprüche 12 bis 14, einschließlich Erweitern der einen oder mehreren Ausgaben durch Einschließen einer oder mehrerer, und vorzugsweise zweier oder mehrerer, auf der visuellen Anzeige überlagerter Linien; einschließlich eines oder mehrerer Symbole, die auf der visuellen Anzeige überlagert sind; einschließlich eines oder mehrerer Worte, die auf der visuellen Anzeige überlagert sind; Schattieren eines Teils oder der gesamten visuellen Anzeige; Verdecken eines Teils oder der gesamten visuellen Anzeige; Strukturieren eines Teils oder der gesamten visuellen Anzeige; Aufhellen oder Intensivieren eines Teils oder der gesamten visuellen Anzeige oder Einfärben eines Teils oder der gesamten visuellen Anzeige.

16. Verfahren nach Anspruch 15, wobei, wenn die Augmentation (24a, 24b) eine oder mehrere Linien einschließt, die auf der visuellen Anzeige überlagert sind, das Verfahren Verwenden der Linien zur Führung der Ablagerung von Rückständen einschließt, die aus der Steuerung der mobilen Erntemaschine (10) durch einen Menschen resultieren.

17. Verfahren nach Anspruch 16, wobei die eine oder die mehreren Linien eines oder mehrere anzeigen von: einem oder mehreren Rändern eines Bereichs und/oder Schwads von abgelegten Rückständen; einem oder mehreren Höhenparametern eines Bereichs und/oder Schwads von abgelagerten Rückständen; einem oder mehreren Querschnitten eines Bereichs und/oder Schwads von abgelagerten Rückständen; einer oder mehreren Feldgrenzen; einer oder mehrerer Grenzen eines Bereichs von ungeerntetem Erntegut; einem oder mehreren Vorgewenden und einem oder mehreren Hindernissen auf der Bodenoberfläche; einer oder mehreren Regionen, in denen die Rückstandsabdeckung geringer oder größer als gewünscht ist; der Stärke und/oder Richtung des vorherrschenden Windes; und/oder dem Einfluss einer Feldneigung auf die Ablagerung von Rückständen.

18. Verfahren nach einem der Ansprüche 12 bis 17, einschließlich Einstellen eines oder mehrerer Parameter der Ablagerung von Rückständen in Abhängigkeit von den Steuerbefehlen, wobei der eine oder die mehreren Parameter eines oder mehrere sind oder einschließen von der Geschwindigkeit des Auswurfs von Rückständen aus der mobilen Erntemaschine (10); dem Bahnwinkel des Auswurfs der Rückstände aus der mobilen Erntemaschine; der Höhe, aus der die Rückstände von der mobilen Erntemaschine ausgestoßen werden; der Geschwindigkeit der mobilen Erntemaschine; und der Fahrtrichtung der mobilen Erntemaschine.

19. Verfahren nach einem der Ansprüche 12 bis 18, wobei die mobile Erntemaschine (10) einen oder mehrere einstellbare Schneider zum Zerkleinern des Rückstands einschließt und wobei das Verfahren eine Variation des Zerkleinerungsgrads des Rückstands durch Einstellen des Schneiders einschließt.

20. Verfahren nach einem der Ansprüche 12 bis 19, einschließend den Schritt des Durchführens von mindestens ersten und zweiten Rückstandsverteilungsdurchgängen entlang eines Feldes oder eines Teils eines Feldes und in einem besagten Durchgang außer dem ersten Durchgang das Verursachen einer Rückstandsverteilung, um basierend auf der Verstärkung des einen oder der mehreren Ausgänge eine mangelhafte Verteilung von Rückständen im ersten Durchgang auszugleichen.

21. Verfahren nach Anspruch 20, einschließlich des Betriebs eines Algorithmus zur Bestimmung eines oder mehrerer Parameter der Verteilung, um eine unzureichende Verteilung von Rückständen im ersten Durchgang auszugleichen.

## Revendications

1. Appareil de dépôt de résidus agricoles comprenant une machine de récolte mobile (10) qui est capable de générer des résidus agricoles et de les déposer sur une surface de sol sur laquelle la machine de récolte mobile est mobile, la machine de récolte mobile comportant un dispositif d'interface (12) qui est capable de générer une ou plusieurs sorties qui sont interprétables par un opérateur humain ; l'appareil comportant un ou plusieurs capteurs (18, 19) de résidus agricoles déposés ou étant en cours de dépôt par la machine de récolte mobile et un ou plusieurs processeurs auxquels le ou les capteurs sont connectés de manière fonctionnelle, le ou les processeurs étant en outre connectés de manière fonctionnelle au dispositif d'interface de telle sorte que le dispositif d'interface génère une ou plusieurs sorties, en fonction d'un ou plusieurs signaux générés par le ou les capteurs, de ou relatifs à des résidus agricoles déposés par la machine de récolte mobile ; et le ou les processeurs étant capables d'ajouter une augmentation interprétable par un humain (24a, 24b) à une ou plusieurs dites sorties indiquant un ou plusieurs paramètres du dépôt de résidus ou s'y rapportant, dans lequel le dispositif d'interface (12) est ou comporte un affichage visuel qui est visible par un opérateur humain et qui affiche une ou plusieurs images de ou relatives à un résidu agricole déposé par la machine de récolte mobile, dans lequel la ou les images sont ou comportent une ou plusieurs parmi une image vidéo, une imitation/simulation, une animation, une vidéo-imitation/simulation hybride, une animation vidéo hybride, une imitation/simulation-animation hybride ou une image statique du résidu en cours d'épandage, ou immédiatement après l'épandage, derrière la machine de récolte mobile.

2. Appareil de dépôt de résidus agricoles selon la revendication 1, dans lequel la ou les images comportent une ou plusieurs images de ou représentant la machine de récolte mobile (10), la ou les images étant variables en fonction d'un ou plusieurs paramètres variables de ou relatifs à la machine de récolte mobile.

3. Appareil de dépôt de résidus agricoles selon la revendication 2, comportant un ou plusieurs dispositifs d'entrée de paramètres qui sont capables de générer un ou plusieurs signaux indiquant la valeur d'un ou plusieurs paramètres variables de ou relatifs à la machine de récolte mobile (10).

4. Appareil de dépôt de résidus agricoles selon la revendication 3 ou l'une quelconque revendication précédente dépendant de celle-ci, dans lequel l'augmentation (24a, 24b) ajoutée à une ou plusieurs dites sorties est ou comporte une ou plusieurs parmi : une ou plusieurs, et de préférence deux ou plus, lignes superposées sur l'affichage visuel ; un ou plusieurs symboles superposés sur l'affichage visuel ; un ou plusieurs mots superposés sur l'affichage visuel ; l'ombrage d'une partie ou de la totalité de l'affichage visuel ; l'occlusion d'une partie ou de la totalité de l'affichage visuel ; la structuration d'une partie ou de la totalité de l'affichage visuel ; la clarification ou l'intensification d'une partie ou de la totalité de l'affichage visuel ou la coloration d'une partie ou de la totalité de l'affichage visuel.

5. Appareil de dépôt de résidus agricoles selon la revendication 4, dans lequel, lorsque l'augmentation (24a, 24b) comporte une ou plusieurs lignes superposées sur l'affichage visuel, les lignes sont telles qu'elles guident le dépôt de résidus résultant de la commande de la machine de récolte mobile (10) par un humain.

6. Appareil de dépôt de résidus agricoles selon la revendication 5, dans lequel la ou les lignes indiquent un ou plusieurs parmi : un ou plusieurs bords d'une zone et/ou d'une bande de résidus déposés ; un ou plusieurs paramètres de hauteur d'une zone et/ou d'une bande de résidus déposés ; une ou plusieurs coupes transversales d'une zone et/ou d'une bande de résidus déposé ; une ou plusieurs limites de champ ; une ou plusieurs limites d'une région de culture non fauchée ; un ou plusieurs promontoires ; un ou plusieurs obstacles sur la surface de sol ; une ou plusieurs régions dans lesquelles la couverture de résidus est inférieure ou supérieure à celle souhaitée ; la force et/ou la direction du vent dominant ; et/ou l'influence d'une pente de champ sur le dépôt de résidus.

7. Appareil de dépôt de résidus agricoles selon l'une quelconque revendication précédente, comportant une cabine d'opérateur (13), dans lequel le dispositif d'interface (12) se trouve à l'intérieur de la cabine d'opérateur ou est supporté par celle-ci ; et dans lequel la cabine d'opérateur comporte une ou plusieurs commandes qui sont connectées de manière fonctionnelle pour permettre à un humain de modifier un ou plusieurs paramètres réglables du dépôt de résidus ou se rapportant à celui-ci en fonction d'une ou plusieurs sorties du dispositif d'interface.

8. Appareil de dépôt de résidus agricoles selon la revendication 7, dans lequel le ou les paramètres réglables du dépôt de résidus ou se rapportant à celui-ci sont ou comportent une ou plusieurs parmi la vitesse d'éjection de résidus de la machine de récolte mobile (10) ; l'angle de trajectoire d'éjection du résidu de la machine de récolte mobile ; la hauteur à partir de laquelle le résidu est éjecté de la machine de récolte mobile ; la vitesse de la machine de récolte mobile ; et le sens de déplacement de la machine de récolte mobile.

9. Appareil de dépôt de résidus agricoles selon la revendication 7 ou la revendication 8, dans lequel la machine de récolte mobile (10) comporte un ou plusieurs dispositifs de coupe réglables permettant de broyer le résidu et dans lequel la ou les commandes permettent de faire varier le degré de broyage du résidu en réglant le dispositif de coupe.

10. Appareil de dépôt de résidus agricoles selon l'une quelconque revendication précédente, dans lequel le ou les capteurs (18, 19) comportent un ou plusieurs capteurs pris en charge par la machine de récolte mobile (10) et/ou un ou plusieurs capteurs pris en charge par une autre machine.

11. Appareil de dépôt de résidus agricoles selon la revendication 10, dans lequel, lorsqu'elle est présente, l'autre machine est choisie dans la liste comportant un véhicule mobile, supporté au sol, et/ou un véhicule aéroporté.

12. Procédé de dépôt de résidus agricoles comprenant les étapes consistant à amener une machine de récolte mobile (10) faisant partie d'un appareil selon l'une quelconque revendication précédente, à se déplacer sur une surface de sol tout en déposant des résidus agricoles sur la surface de sol, le dépôt étant ajusté conformément à des commandes de commande saisies dans la machine de récolte mobile par un humain sur la base de la compréhension d'une ou plusieurs sorties du dispositif d'interface (12) par l'humain, et la ou les sorties étant augmentées d'une ou plusieurs manières interprétables par un humain sur la base d'un ou plusieurs signaux, de ou relatifs à des résidus agricoles déposés par la machine de récolte mobile, générés par le ou les capteurs (18, 19), dans lequel le dispositif d'interface (12) est ou comporte un affichage visuel qui est visible par un opérateur humain et qui affiche une ou plusieurs images de ou relatives à des résidus agricoles déposés par la machine de récolte mobile, dans lequel la ou les images sont ou comportent une ou plusieurs parmi une image vidéo, une imitation/simulation, une animation, une vidéo-imitation/simulation hybride, une animation vidéo hybride, une imitation/simulation-animation hybride ou une image statique du résidu en cours d'étalement, ou immédiatement après l'épandage, derrière la machine de récolte mobile.

13. Procédé de dépôt de résidus agricoles comprenant les étapes consistant à amener une machine de récolte mobile (10) faisant partie selon l'une quelconque des revendications 1 à 11 des présentes à se déplacer sur une surface de sol tout en déposant un résidu agricole sur la surface de sol, le dépôt étant ajusté conformément à des instructions de commande générées par le ou les processeurs en fonction d'une ou plusieurs sorties du ou des capteurs (18, 19) de résidus agricoles déposés ou étant en cours de dépôt par la machine de récolte mobile, la ou les sorties du dispositif d'interface (12) étant augmentées d'une ou plusieurs manières interprétables par un humain en fonction d'un ou plusieurs signaux, de ou relatifs aux résidus agricoles déposés par la machine de récolte mobile, générés par le ou les capteurs, dans lequel le dispositif d'interface (12) est ou comporte un affichage visuel qui est visible par un opérateur humain et qui affiche une ou plusieurs images de ou relatives aux résidus agricoles déposés par la machine de récolte mobile, dans lequel la ou les images sont ou comportent une ou plusieurs parmi une image vidéo, une imitation/simulation, une animation, une vidéo-imitation/simulation hybride, une vidéo-animation hybride, une imitation/simulation-animation hybride ou une image statique du résidu en cours d'épandage, ou immédiatement après l'épandage, derrière la machine de récolte mobile.

14. Procédé selon la revendication 12 ou la revendication 13, comportant le support d'un ou plusieurs desdits capteurs sur la machine de récolte mobile (10) et/ou sur un autre véhicule qui est mobile indépendamment de la machine de récolte mobile.

15. Procédé selon l'une quelconque des revendications 12 à 14, comportant l'augmentation de la ou des sorties en incluant une ou plusieurs, et de préférence deux ou plus, lignes superposées sur l'affichage visuel ; l'inclusion d'un ou plusieurs symboles superposés sur l'affichage visuel ; l'inclusion d'un ou plusieurs mots superposés sur l'affichage visuel ; l'ombrage d'une partie ou de la totalité de l'affichage visuel ; l'occlusion d'une partie ou de la totalité de l'affichage visuel ; la structuration d'une partie ou de la totalité de l'affichage visuel ; la clarification ou l'intensification d'une partie ou de la totalité de l'affichage visuel ou la coloration d'une partie ou de la totalité de l'affichage visuel.

16. Procédé selon la revendication 15, dans lequel, lorsque l'augmentation (24a, 24b) comporte une ou plusieurs lignes superposées sur l'affichage visuel, le procédé comporte l'utilisation des lignes pour guider le dépôt de résidus résultant de la commande de la machine de récolte mobile (10) par un humain.

17. Procédé selon la revendication 16, dans lequel la ou les lignes indiquent un ou plusieurs parmi : un ou plusieurs bords d'une zone et/ou d'une bande de résidus déposé ; un ou plusieurs paramètres de hauteur d'une zone et/ou d'une bande de résidus déposés ; une ou plusieurs coupes transversales d'une zone et/ou d'une bande de résidu déposé ; une ou plusieurs limites de champ ; une ou plusieurs limites d'une région de culture non récoltée ; un ou plusieurs promontoires ; et un ou plusieurs obstacles sur la surface de sol ; une ou plusieurs régions dans lesquelles la couverture de résidus est inférieure ou supérieure à celle souhaitée ; la force et/ou la direction du vent dominant ; et/ou l'influence d'une pente de champ sur le dépôt de résidus.

18. Procédé selon l'une quelconque des revendications 12 à 17, comportant le réglage d'un ou plusieurs paramètres de dépôt de résidus en fonction des commandes de contrôle, le ou les paramètres étant ou comportant une ou plusieurs parmi la vitesse d'éjection de résidus de la machine de récolte mobile (10) ; l'angle de trajectoire d'éjection du résidu de la machine de récolte mobile ; la hauteur à partir de laquelle le résidu est éjecté de la machine de récolte mobile ; la vitesse de la machine de récolte mobile ; et le sens de déplacement de la machine de récolte mobile.

19. Procédé selon l'une quelconque des revendications 12 à 18, dans lequel la machine de récolte mobile (10) comporte un ou plusieurs dispositifs de coupe réglables permettant de broyer le résidu et dans lequel le procédé comporte la variation du degré de broyage du résidu en réglant le dispositif de coupe.

20. Procédé selon l'une quelconque des revendications 12 à 19, comportant l'étape consistant à réaliser au moins des premier et second passages d'épandage de résidus le long d'un champ ou d'une partie d'un champ et dans un dit passage autre que le premier passage, à amener un épandage de résidus de manière à compenser, en fonction de l'augmentation de la ou des sorties, pour un épandage déficient de résidus lors du premier passage.

21. Procédé selon la revendication 20, comportant le fonctionnement d'un algorithme pour déterminer un ou plusieurs paramètres d'épandage de manière à compenser l'épandage déficient de résidus dans le premier passage.
